# FASCICULE DE BREVET EUROPEEN

(11) **EP 2 149 295 B1**
(45) Date de publication et mention de la délivrance du brevet: **06.11.2013**
(21) Numéro de dépôt: 09166922.6
(22) Date de dépôt: 31.07.2009
(51) Int. Cl.: A01J 25/16

(54) **Dispositif de stockage et de transport de fromages**
Lager- und Transportvorrichtung für Käse
Device for storing and transporting cheeses

(30) Priorité: 01.08.2008 FR 0855333
(43) Date de publication de la demande: 03.02.2010
(73) Titulaire: PICNAL France SAS, 92748 Nanterre Cedex (FR)
(72) Inventeur: Duran Soler, Ricard, 08224 Terrassa Barcelona (ES)
(74) Mandataire: Rummler, Felix

(56) Documents cités:
- DE-U1- 8 702 304
- FR-A- 2 548 140
- FR-A- 2 641 526
- FR-A- 2 681 761
- GB-A- 1 249 994

## Description

La présente invention se rapporte à un dispositif de stockage et de transport de fromages.

Le domaine technique de l'invention est, d'une façon générale, celui des fromages. Plus particulièrement, l'invention concerne un dispositif, de préférence une caisse, pour stocker et transporter des fromages de type boules de fromage, quel que soit leur état de fermentation.

On connaît dans l'état de la technique, des plateaux, des bacs, et d'autres supports plats, généralement en bois, sur lesquels on dispose une quantité de fromage proportionnelle à la surface disponible et à la taille des fromages.

Mais ce type de support présente de nombreux problèmes techniques. En effet, pour empêcher les fromages de glisser sur leur support, il est nécessaire, pour les stabiliser et les caler, d'aménager des logements creux, de préférence concaves. La surface de contact est alors sensiblement augmentée, ce qui accentue un collage de la croûte sur le support, d'autant plus que le stockage dure longtemps. Ce collage dégrade la qualité du fromage qui devient, de ce fait, plus difficile à vendre.

On a récemment vu se développer des supports avec des logements présentant des segments supports séparés les uns des autres par des interstices aptes à évacuer un liquide issu d'une sudation du fromage voir par exemple le document FR 2 641 526 A1. Mais les résultats obtenus ne sont pas convaincants car la surface de contact est encore bien trop grande et surtout trop lisse.

L'invention propose de résoudre les problèmes précédemment décrits en réalisant une caisse apte à minimiser un collage du fromage au sein du logement, contre les segments. Dans l'invention, on a eu l'idée de mouler des segments supports en relief de manière à ce que la forme et la taille de leur surface de contact avec le fromage soit la plus appropriée.

L'invention a donc pour objet un dispositif de stockage et de transport de fromages de type boules de fromage, réalisé en matériau plastique injecté et comportant un plateau support, les boules étant disposées et calées dans des logements circulaires et concaves ménagés, dans le plateau, les logements présentant des segments supports séparés les uns des autres par des interstices aptes à évacuer un liquide issu d'une sudation du fromage, **caractérisé en ce que,**
- les segments présentent des protubérances orientées vers le fromage.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :
- figure 1 : une représentation schématique, vue en perspective oblique de dessus, d'un dispositif de stockage et de transport de boules de fromage selon l'invention,
- figure 2 : une représentation schématique, vue en perspective oblique de dessous, du même dispositif selon l'invention,
- figure 3 : une représentation schématique, vue en perspective oblique de dessus, d'un premier exemple d'aménagement de nervures protubérantes d'un logement circulaire et concave du dispositif selon l'invention,
- figure 4 : une représentation schématique, vue en perspective oblique de dessus, d'un deuxième exemple d'aménagement de nervures protubérantes du même logement selon l'invention,
- figure 5 : une représentation schématique, vue en perspective oblique de dessus, d'un troisième exemple d'aménagement de nervures protubérantes du logement selon l'invention.

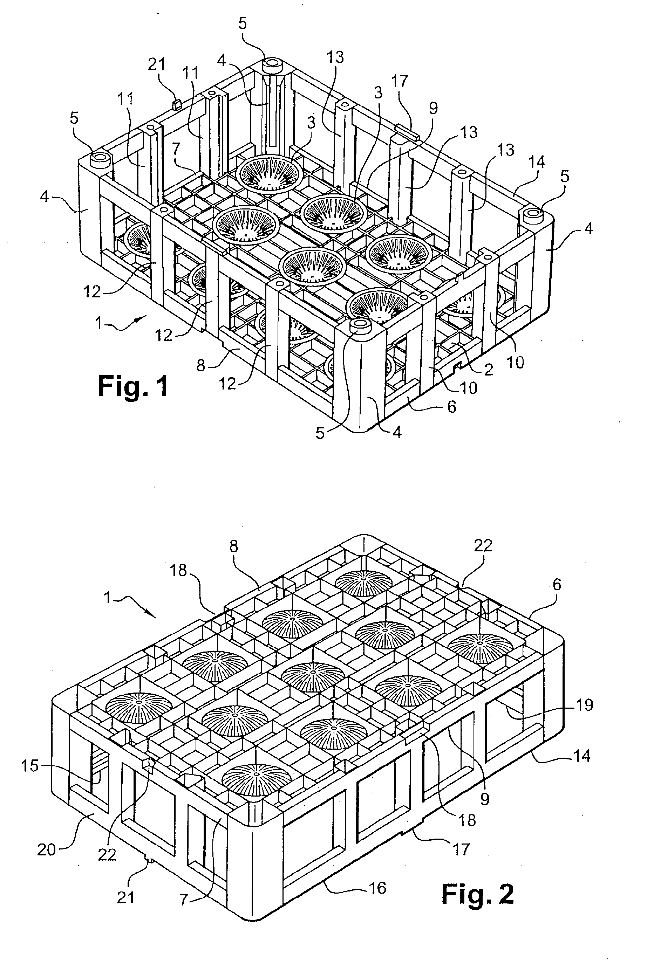

La figure 1 représente schématiquement une vue en perspective oblique de dessus d'un dispositif 1 de stockage et de transport de boules de fromage selon l'invention.

Les valeurs numériques fournies dans la description qui suit ne sont présentées qu'à titre indicatif et nullement limitatif de l'invention.

Le dispositif 1 est réalisé en matériau plastique injecté de préférence du PP, ou du PE. Dans une variante, la matière utilisée peut être autre que du plastique : du bois aggloméré, ou un composite bois/plastique.

Le dispositif 1 comporte un plateau support 2 qui présente de préférence une structure de type nid d'abeilles.

Dans un exemple, le plateau support 2 présente onze logements 3 circulaires et concaves destinés à accueillir et à caler des fromages se présentant de préférence sous la forme de boules. Le dispositif présente une symétrie par rapport à un plan perpendiculaire au plateau et perpendiculaire à la longueur du dispositif en son milieu.

Dans un exemple, le plateau support 2 présente une forme rectangulaire. Le plateau 2 présente en ses quatre coins des pieds 4 alvéolés et sensiblement creux s'élevant sur une hauteur légèrement supérieure au diamètre des boules de fromages. On entend par boule de fromage, tout fromage de type Gouda, Edam, Bola, qui présente une forme au moins partiellement sphérique avec un rayon de l'ordre de 70 mm à plus ou moins 50%.

Typiquement, les pieds 4 présentent en leur sommet un pion 5 de gerbage destiné à s'insérer dans le pied creux correspondant d'un autre dispositif selon l'invention qu'on aurait posé dessus et placé bord à bord.

Des bords 6 et 7 les plus courts du plateau support 2 présentent chacun deux plots 10 et 11 alvéolés et sensiblement creux, de même hauteur que les pieds 4 mais de largeur sensiblement inférieure.

Des bords 8 et 9 les plus longs du plateau support 2 présentent chacun trois plots 12 et 13 alvéolés et sensiblement creux, de même hauteur que les pieds 4 mais de largeur sensiblement inférieure.

Dans un exemple, les bords 6 et 7 mesurent 400 mm de long et les bords 8 et 9 mesurent 650 mm de long.

Un cadre 14, compris dans un plan parallèle au plateau 2, relie les pieds et les plots 10 à 13 par leur extrémité supérieure. Typiquement, le cadre 14 présente aussi une structure de type nid d'abeilles. La structure globale du dispositif 1 lui permet de supporter une charge d'une vingtaine de kilogrammes.

La figure 2 représente schématiquement une vue en perspective oblique de dessous du dispositif selon l'invention.

Des côtés 15 et 16 les plus longs du cadre 14 présentent chacun, en leur milieu, un ergot 17 de gerbage orienté vers le côté opposé au plateau 2. Les côtés 8 et 9 présentent chacun, en leur milieu, une encoche 18 de gerbage destinée à recevoir un ergot de gerbage correspondant d'un autre dispositif selon l'invention sous-jacent qu'on aurait placé bord à bord.

Des côtés 19 et 20 les plus courts du cadre 14 présentent chacun, en leur milieu, un ergot 21 de gerbage orienté vers le côté opposé au plateau 2. Les côtés 6 et 7 présentent chacun, en leur milieu, une encoche 22 de gerbage destinée à recevoir un ergot de gerbage correspondant d'un autre dispositif selon l'invention sous-jacent qu'on aurait placé bord à bord.

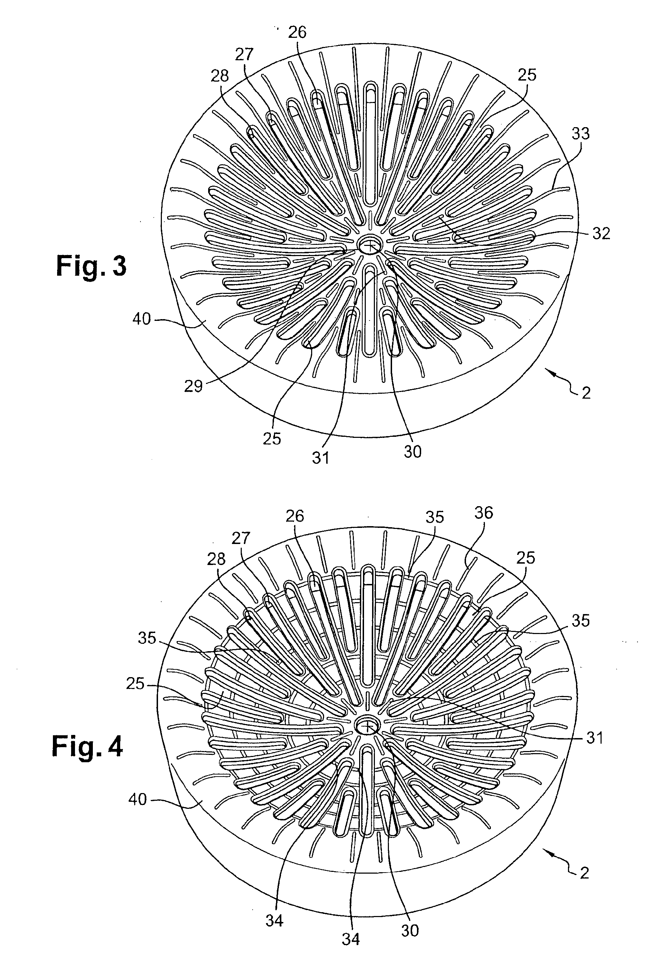

La figure 3 représente schématiquement une vue en perspective oblique de dessus, d'un premier exemple d'aménagement de nervures protubérantes 23 et 24 d'un logement circulaire et concave 3 du dispositif 1 selon l'invention.

Dans un exemple, les logements 3 présentent une profondeur de 24 mm et un diamètre de 115 mm pour accueillir des boules de fromage de 140 mm de diamètre.

Un tel logement 3 présente des segments supports 25 séparés les uns des autres par des interstices longitudinaux 26 à 29 aptes à évacuer un liquide issu d'une sudation du fromage. Dans cet exemple, on distingue :
- neuf interstices longs 26 d'une longueur de l'ordre de 50 mm, d'une largeur de l'ordre de 40 mm, et disposés radialement tous les 40° par rapport à un centre 30 du logement 3 ;
- neuf interstices moyens 27 d'une longueur de l'ordre de 45 mm, d'une largeur de l'ordre de 40 mm, et disposés radialement tous les 40° par rapport au centre 30 et de part et d'autre des interstices 26 ;
- dix-huit interstices courts 28 d'une longueur de l'ordre de 30 mm, d'une largeur de l'ordre de 40 mm, et disposés radialement tous les 20° par rapport au centre 30 et de part et d'autre des interstices 27 ;
- un interstice circulaire central 29 d'un diamètre de l'ordre de 10 mm.

Typiquement, les extrémités des interstices 26 à 28 les plus éloignées du centre 30 sont comprises dans un cercle dont le rayon est proche de celui du logement 3.

Les segments 25 présentent des protubérances 31 à 39 orientées vers le fromage et aptes à minimiser un collage du fromage au sein du logement 3, contre les segments.

Dans les exemples des figures 3 à 5, les protubérances sont des nervures. Dans une variante non-représentée, les protubérances pourraient être des ergots.

Dans ces deux cas, les protubérances sont de préférence des bosses arrondies dont la hauteur, le rayon, est de l'ordre du quart de la largeur d'un interstice à plus ou moins 50%, i.e. de l'ordre de quelques dixièmes de millimètres. Dans des variantes, les protubérances peuvent être plates ou pointues.

Sur la figure 3, des nervures 31, 32 et 33 sont ménagées radialement et sont continues. Neuf nervures courtes 31 sont ménagées dans le prolongement des interstices moyens 27 entre l'interstice central 29 et lesdits interstices moyens. La longueur des nervures 31 est de l'ordre de 10 mm. Dix-huit nervures courtes 32 sont ménagées dans le prolongement des interstices courts 28 entre l'extrémité des interstices moyens 27 la plus proche du centre 30 et les dits interstices courts. La longueur des nervures 32 est de l'ordre de 10 mm. Trente-six nervures longues 33 sont ménagées de part et d'autre des extrémités des interstices 26 à 28 les plus éloignées du centre 30 ; elles s'étendent du milieu des interstices courts 28 jusqu'à la périphérie 40 sur une longueur de l'ordre de 20 mm.

La figure 4 représente schématiquement une vue en perspective oblique de dessus, d'un deuxième exemple d'aménagement des nervures protubérantes du même logement 3 du dispositif 1 selon l'invention.

Dans cet exemple, neuf nervures courtes et continues 31, identiques à celles de la figure 3, sont ménagées radialement dans le prolongement des interstices moyens 27 entre l'interstice central 29 et les dits interstices moyens. La longueur des nervures 31 est de l'ordre de 10 mm. Trente-six nervures moyennes 36 sont ménagées de part et d'autre des extrémités des interstices 26 à 28 les plus éloignées du centre 30 ; elles s'étendent de l'extrémité des interstices 26 à 28 jusqu'à la périphérie 40 sur une longueur de l'ordre de 15 mm.

Des nervures discontinues 34 et 35 sont ménagées de manière circonférentielle suivant cinq cercles dont les rayons sont espacés de 10 mm environ. Les deux cercles de nervures 34 les plus proches du centre coupent tous les interstices longs 26 et moyens 27 à proximité de l'extrémité centrale des interstices moyens 27. Les trois cercles de nervures 35 les plus éloignés du centre coupent tous les interstices longs 26, moyens 27 et courts 28.

Dans une variante, les nervures sont ménagées spiralement.

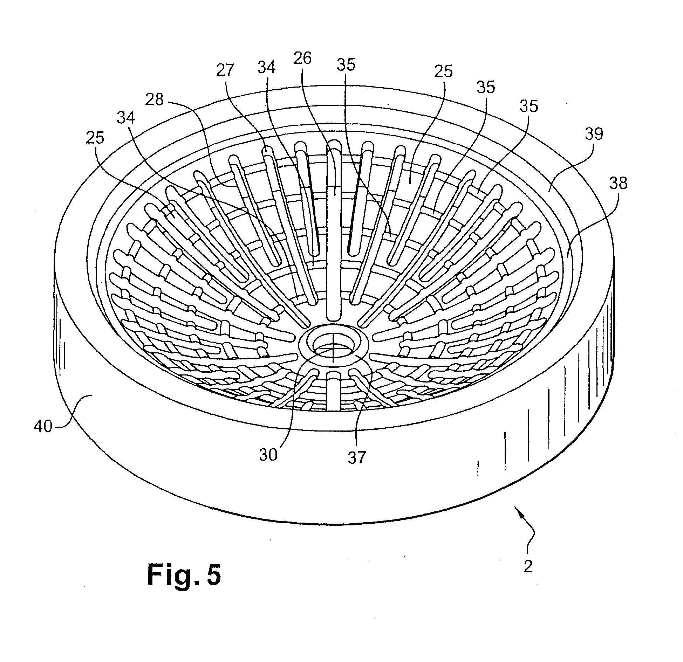

La figure 5 représente schématiquement une vue en perspective oblique de dessus d'un troisième exemple d'aménagement des nervures protubérantes du logement 3 du dispositif 1 selon l'invention. Des nervures discontinues 34 et 35, identiques à celles de la figure 4, sont ménagées de manière circonférentielle suivant cinq cercles dont les rayons sont espacés de 10 mm environ. Les deux cercles de nervures 34 les plus proches du centre coupent tous les interstices longs 26 et moyens 27 à proximité de l'extrémité centrale des interstices moyens 27. Les trois cercles de nervures 35 les plus éloignés du centre coupent tous les interstices longs 26, moyens 27 et courts 28.

Le logement 3 présente une nervure circulaire continue 37 ménagée autour du centre 30 du logement 3. Le diamètre de la nervure 37 est de l'ordre de 20 mm.

Le logement 3 présente deux nervures circulaires continues 38 et 39 ménagées à la périphérie 40 du logement 3.

## Revendications

1. Dispositif (1) de stockage et de transport de fromages de type boules de fromage, réalisé en matériau plastique injecté et comportant un plateau (2) support, les boules étant disposées et calées dans des logements (3) circulaires et concaves ménagés dans le plateau, les logements présentant des segments supports (25) séparés les uns des autres par des interstices (26-29) aptes à évacuer un liquide issu d'une sudation du fromage,
**caractérisé en ce que**,
- les segments présentent des protubérances (31-39) orientées vers le fromage.

2. Dispositif selon la revendication 1, **caractérisé en ce que**
- les protubérances sont des ergots.

3. Dispositif selon la revendication 1, **caractérisé en ce que**
- les protubérances sont des nervures.

4. Dispositif selon l'une des revendications 1 à 3, **caractérisé en ce que**
- les protubérances sont des bosses arrondies dont la hauteur, le rayon, est de l'ordre du quart de la largeur d'un interstice à plus ou moins 50%.

5. Dispositif selon la revendication 1, **caractérisé en ce que**
- les protubérances sont ménagées radialement (fig.3).

6. Dispositif selon la revendication 1, **caractérisé en ce que**
- les protubérances sont ménagées spiralement ou de manière circonférentielle (fig.4 et fig.5).

7. Dispositif selon la revendication 1, **caractérisé en ce que**
- il présente trois nervures circulaires ménagées à la périphérie (40) et au centre (30) du logement.

8. Dispositif selon l'une des revendications 3 à 7, **caractérisé en ce que**
- les nervures sont continues.

9. Dispositif selon l'une des revendications 3 à 7, **caractérisé en ce que**
- les nervures sont discontinues.

10. Dispositif selon l'une des revendications 1 à 9, **caractérisé en ce que**
- les logements présentent une profondeur de 24 mm et un diamètre de 115 mm pour accueillir des boules de fromage de 140 mm de diamètre.

## Patentansprüche

1. Lager- und Transportvorrichtung (1) für Käse vom Typ Käsekugeln, die aus einem Spritzkunststoff hergestellt ist und eine Stützplatte (2) umfasst, wobei die Kugeln in kreisförmigen und konkaven Lagerungen (3) angeordnet und befestigt sind, die in der Platte ausgenommen wind, wobei die Lagerungen Stützsegmente (25) aufweisen, die voneinander durch Zwischenräume (26-29) getrennt sind, die geeignet sind, eine durch das Schwitzen des Käses austretende Flüssigkeit abzuleiten,
**dadurch gekennzeichnet, dass**
- die Segmente Ausstülpungen (31-39) aufweisen, die zum Käse gerichtet sind.

2. Vorrichtung nach Anspruch 1, **dadurch gekennzeichnet, dass**
- die Ausstülpungen Haken sind.

3. Vorrichtung nach Anspruch 1, **dadurch gekennzeichnet, dass**
- die Ausstülpungen Rippen sind.

4. Vorrichtung nach einem der Ansprüche 1 bis 3, **dadurch gekennzeichnet, dass**
- die Ausstülpungen abgerundete Wülste sind, deren Höhe, der Radius, ungefähr ein Viertel der Breite eines Zwischenraums bis auf mehr oder weniger 50 % beträgt.

5. Vorrichtung nach Anspruch 1, **dadurch gekennzeichnet, dass**
- die Ausstülpungen radial vorgesehen sind (Figur 3).

6. Vorrichtung nach Anspruch 1, **dadurch gekennzeichnet, dass**
- die Ausstülpungen spiralförmig oder umfangsartig vorgesehen sind (Figur 4 und Figur 5).

7. Vorrichtung nach Anspruch 1, **dadurch gekennzeichnet, dass**
- sie drei kreisförmige Rippen aufweist, die an der Peripherie (40) und im Zentrum (30) der Lagerung vorgesehen sind.

8. Vorrichtung nach einem der Ansprüche 3 bis 7, **dadurch gekennzeichnet, dass**
- die Rippen durchgehend sind.

9. Vorrichtung nach einem der Ansprüche 3 bis 7, **dadurch gekennzeichnet, dass**
- die Rippen unterbrochen sind.

10. Vorrichtung nach einem der Ansprüche 1 bis 9, **dadurch gekennzeichnet, dass**
- die Lagerungen eine Tiefe von 24 mm und einen Durchmesser von 115 mm aufweisen, um Käsekugeln mit einem Durchmesser von 140 mm aufzunehmen.

## Claims

1. Device (1) for storing and transporting cheeses of the ball-shaped cheese variety, wherein the device is made of injected plastic material and comprises a support plate (2), wherein the balls are arranged and held in circular concave housings (3) created in the plate, wherein the housings have support segments (25) which are separated from one another by gaps (26-29) designed to remove liquid produced when the cheese sweats,
**characterized in that**
- the segments have projections (31-39) which are oriented toward the cheese.

2. Device according to Claim 1, **characterized in that**
- the projections are studs.

3. Device according to Claim 1, **characterized in that**
- the projections are ribs.

4. Device according to one of Claims 1 to 3, **characterized in that**
- the projections are rounded bosses of which the height, the radius, is of the order of one quarter of the width of a gap, plus or minus 50%.

5. Device according to Claim 1, **characterized in that**
- the projections are arranged in the radial direction (fig. 3).

6. Device according to Claim 1, **characterized in that**
- the projections are in a spiral or circumferential arrangement (fig. 4 and fig. 5).

7. Device according to Claim 1, **characterized in that**
- it has three circular ribs created on the periphery (40) and at the centre (30) of the housing.

8. Device according to one of Claims 3 to 7, **characterized in that**
- the ribs are continuous.

9. Device according to one of Claims 3 to 7, **characterized in that**
- the ribs are discontinuous.

10. Device according to one of Claims 1 to 9, **characterized in that**
- the housings are 24 mm deep and 115 mm in diameter so as to accommodate balls of cheese 140 mm in diameter.
